# EUROPEAN PATENT APPLICATION

(11) **EP 3 584 664 A1**
(43) Date of publication of application: **25.12.2019**
(21) Application number: 18754951.4
(22) Date of filing: 14.02.2018
(51) Int. Cl.: G05D 19/02, G01M 7/02

(54) **VIBRATION CONTROL APPARATUS AND METHOD**

(30) Priority: 16.02.2017 KR 20170020848
(71) Applicant: TVS Co., Ltd., Gumi-si, Gyeongsangbuk-do 39377 (KR)
(72) Inventor: PAIK, Ock Gyung, Gimcheon-si, Gyeongsangbuk-do 39510 (KR)
(74) Representative: Balder IP Law, S.L.
(86) International application number: PCT/KR2018/001912
(87) International publication number: WO 2018/151515

(57) **Abstract**

A vibration control apparatus according to the present invention comprises: a sensor which senses a vibration from a vibrating body; a control unit which generates and delivers a corresponding signal for suppressing the vibration signal; and an actuator which is driven in response to the corresponding signal, wherein the control unit is previously designed (programmed) such that a corresponding signal obtained by the preceding vibration analysis is generated. Meanwhile, a vibration control method according to the present invention enables a corresponding signal activation unit to deliver a corresponding signal to an actuator in response to the sensed vibration signal, in a state in which the method is previously designed (programmed) in the corresponding signal activation unit from the preceding vibration analysis of a vibrating body. According to the present invention, there is no need to install a frequency analyzer(vibration analysis equipment) in the active damping kit since preceding vibration analysis is conducted. Thus an active damping kit of small size and low price can be constructed and real-time response is possible. Also, by supplying a corresponding signal which is simple and effective for a vibration control by preceding vibration analysis, noise and error can be minimized, and the possibility of resonance can be remarkably lowered because it is not necessary to respond to the entire signal with infinite number of frequencies.

## Description

### Technical Field

The present disclosure relates to a device and a method for controlling vibrations. More specifically, a device and a method for controlling vibrations, wherein a circuit is fabricated such that an optimal response signal can be supplied through preceding vibration analysis of a vibrating body, and the response signal is supplied to an actuator when a signal is sensed by a sensor, thereby controlling vibration.

### Background Art

The most effective method for vibration control is to analyze (experiment and simulate) the characteristics of a structure in the design step such that resonance and the transmission of vibrations are suppressed.

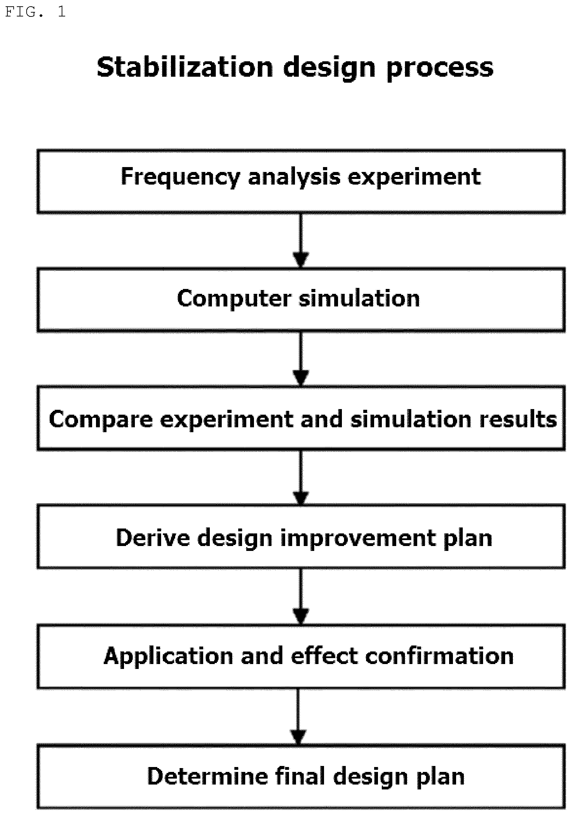

FIG. 1 is an explanatory diagram illustrating a process for vibration analysis and structure/equipment stabilization.

Referring to FIG. 1, vibration analysis is completed through the processes of obtaining the natural frequencies and the mode shapes of a vibrating body (cantilever) through experiment and simulation, and then confirming whether or not the two results are identical.

Dampers are the most widely used vibration reducing devices, and are classified into passive dampers and active dampers.

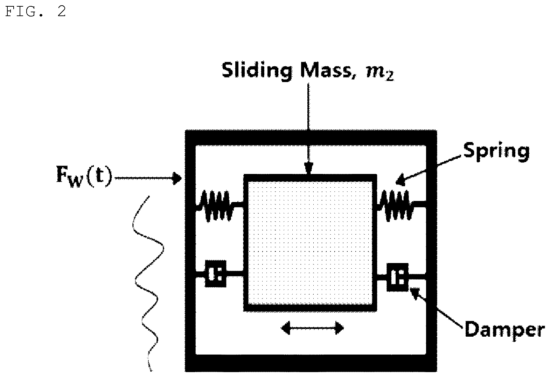

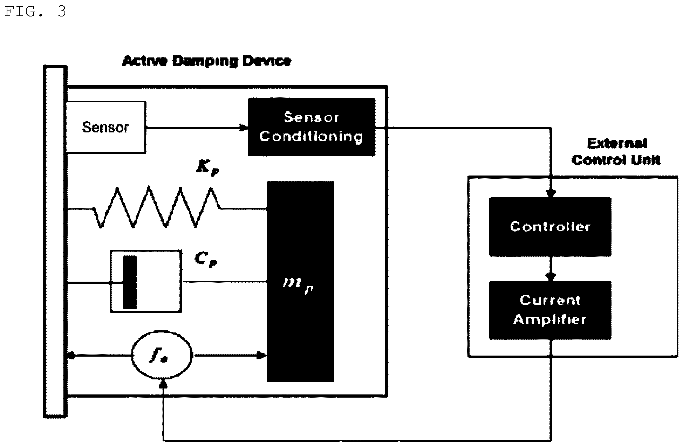

FIG. 2 is a configuration diagram of a passive damper, and FIG. 3 is a configuration diagram of an active damper.

Referring to FIG. 2 and FIG. 3, the passive damper is a device having a spring or a vibration absorbing material added to the vibrating part so as to dissipate the inner stress/friction energy of vibrating objects, thereby absorbing vibrations. However, installation of a passive damper decreases the rigidity of the structure and may increase the overall magnitude of vibrations in many cases, thereby degrading the product quality, durability and reliability.

On the other hand, an active damper is generally a device for transmitting a sensed vibration signal to an external control unit (including a frequency analyzer) to analyze the vibration signal, and to generate a response signal capable of suppressing the vibration signal through a signal generator, and to deliver the same to an actuator, thereby alleviating vibration. However, the method of analyzing the vibration signal inside the control unit by using the frequency analyzer has a problem in that an expensive frequency analyzer (which costs at least $10,000) is indispensable, various components (an antenna, a battery, and a cable) are necessary to receive/transmit signals between a bulky external controller, a sensor, and an actuator, and a signal generator needs to be added to supply an appropriate signal.

The frequency analyzer is an effective equipment capable of obtaining accurate values related to vibration, but is expensive, and requires a complicated calculation process. In other words, the signal analysis process alone requires 2-4 seconds (time necessary to convert a time-domain signal into a frequency-domain signal). As a result, a response output is possible after tens of cycles (20-40 cycles when the frequency is 10Hz) have elapsed following occurrence of vibration. The resulting problem is that real-time vibration control is impossible, and the control efficiency is thus low.

In addition, active dampers may be classified into cases in which vibration analysis is conducted inside an active damping kit and cases in which no vibration analysis is conducted.

In a case according to the prior art in which vibration analysis is conducted inside an active damper, a vibration signal is analyzed through a control box including a frequency analyzer(vibration analysis equipment) inside an active damping kit or another type of measurement equipment, and a vibration wave having an inverse phase is transmitted to a signal generator. The mechanism of an active damping system including a vibration analysis process inside an active damping kit employed by the prior art described above can be summarized as follows: the frequency analyzer analyzes vibration measured by a sensor, thereby obtains a finite number of frequency components, and the signal generator supplies that many responsive signals, with same frequency and opposite phases, to the actuator. The measured vibration signals and the inverse signals generated by the actuator then meet and counterbalance each other, thereby alleviating vibration.

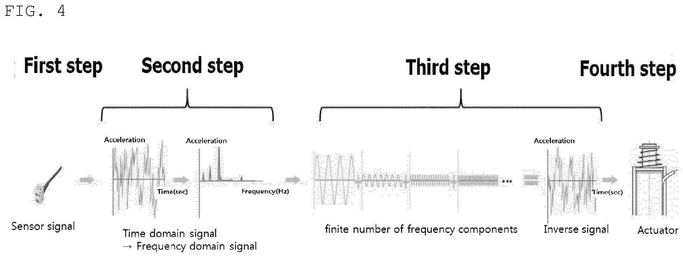

This type of operation mechanism can be summarized into the following four steps as illustrated in FIG. 4.

FIG. 4 is an explanatory diagram illustrating the operation mechanism of a conventional active damper in terms of waveforms, and the following operations proceed in respective steps:
- First step: the sensor measures vibration.
- Second step: the time-domain signal measured by the sensor is transmitted to the frequency analyzer inside the active damping kit, and is converted into a frequency-domain signal. This needs to undergo a complicated process that requires a mathematical calculation, and requires about 2-4 seconds. On the other hand, vibration in general consists of an infinite number of frequency components. The frequency-domain diagram shows multiple peaks, and the frequencies thereof correspond to frequency components constituting a vibration.
- Third step: the signal generator generates the number of vibration signals with corresponding frequency components having the opposite phase, and the reaction signal with same frequency and opposite phase is supplied to the actuator.
- Fourth step: the actuator is operated by the delivered inverse signal and supply the same to the vibrating body.

However, if the frequency analysis is conducted inside the active damping kit as described above, a long time is required throughout the entire process of analyzing vibration such that multiple frequency components are accurately analyzed. The resulting problem is that real-time control is impossible, and the expensive frequency analyzer included in the active damping kit increases the price of the active damper.

In addition, when the sensor transmits a signal to the frequency analyzer, the frequency analyzer analyzes the frequency, the amplitude, and the cycle, and then supplies an inverse vibration wave to the signal generator. This process requires wired or wireless transmission/reception and, consequently, additional components such as a wire, an antenna, and a battery are necessary. The volume of the active damping kit is increased because the battery and the antenna are to be installed in the unit. And this makes it difficult to configure a compact and integral active damper.

In a case of the prior art in which no vibration analysis is conducted inside the active damper, the entire signal of a measured vibration signal is inverted so as to respond to the vibration signal. The mechanism of an active damping system including no frequency analysis process inside the active damping kit employed by the prior art, described above, is summarized as follows: a signal from the sensor (1) passes through phase inverters (31, 32) and then drives the actuator (2), thereby controlling vibration of the vibrating body (4) .

However, this technology requires that the actuator must be attached to the vibrating body because the response signal needs to move opposite to the vibration so as to respond to the entire signal of the vibrating body.

When this scheme is employed, the frequency of the actuator operation has to be identical to the natural frequency of the vibrating body. Because the response signal is supposed to be the opposite signal of the vibration signal. Accordingly, resonance occurs between the frequencies of actuator and the vibrating body. In addition, there is a very high possibility that the responding signal has noise and errors in the process of generating a signal corresponding to the vibration of a complicated signal having an infinite number of frequency components. In general, the more complicated the signal is, the longer time is required to process the signal. As a result, when the vibration signal is complicated, the delay time increases, making accurate real-time control difficult.

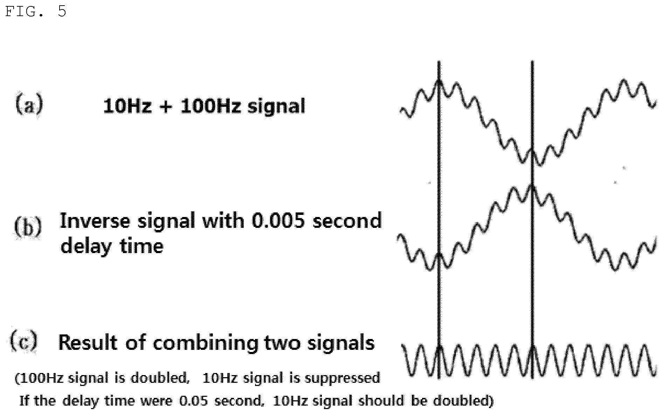

FIG. 5 is a diagram including vibration waves provided to describe problems that may be caused by delay time of an active damper in which an inverse signal is generated with regard to the entire vibration signal.

The influence of the delay time, which occurs in the process of analyzing and processing (sensing, reversing, transmitting) a vibration signal and supplying an inverse signal to a vibrating body by an actuator of an active damper system, is described in FIG. 5. FIG. 5(a) is a vibration signal of 10Hz + 100Hz frequency, and FIG. 5(b) is obtained by inverting the phase of FIG. 5(a) with a 0.005 second delay time. In this case, 0.005 second corresponds to 1/2 cycle of 100Hz vibration. Accordingly, the reversed 100Hz vibration has the same phase with the original signal, and the added signal will double the original vibration of the frequency. In other words, the low frequency (10Hz) vibration meeting inverse signal with short delay time thus can dissipate, but in case of the high frequency(100Hz) vibration, inverse signal even with short delay time results in adding the almost identical signal and further magnifying vibration.

Meanwhile, another problem occurring when responding to the entire vibration signal will be described.

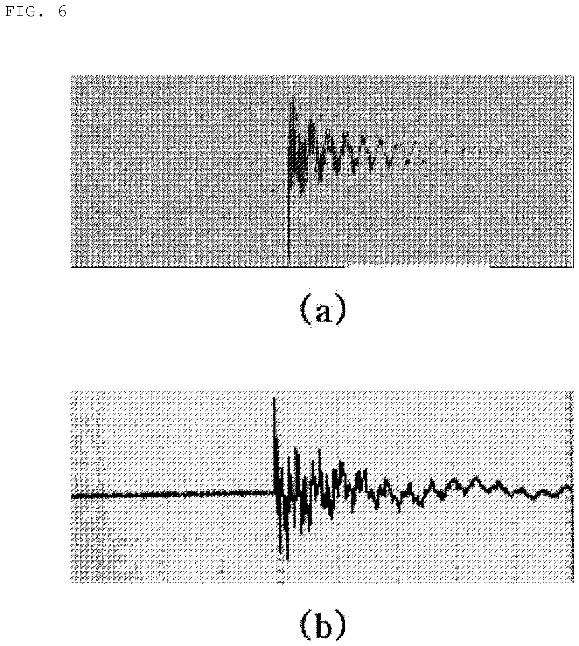

FIG. 6 is a diagram including vibration waves illustrating an original vibration signal and a signal that has passed through a printed circuit board (PCB) or a flexible printed circuit board (FPCB).

FIG. 6(a) corresponds to a waveform diagram of a vibration signal, and FIG. 6(b) corresponds to a waveform diagram of a signal with generated noise after passing through the PCB.

Referring to FIG. 6, it can be confirmed that, after the vibration signal (impulse vibration) passes through the PCB, noise is generated due to a problem regarding interface between the sensor, the PCB, and the actuator. The more frequency components of the signal are, the more likely noise will occur. The actuator will respond even to a small noise signal, thereby generating more errors in the process of generating the response signal, and degrading the efficiency.

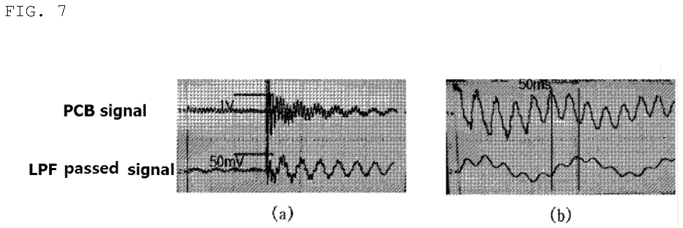

If a low-pass filter (LPF) is used to reduce such noises, a phenomenon as illustrated in FIG. 7 will occur.

FIG. 7(a) corresponds to a waveform diagram of a PCB signal and an LPF passed signal. The upper signal in FIG. 7(a) corresponds to a signal that has just passed through a PCB, and the lower signal corresponds to a signal that has passed through a PCB and a low-pass filter (LPF) in order to remove noise. FIG. 7(b) corresponds to a magnified diagram of the LPF passed signal.

Referring to FIG. 7, most frequencies of vibrations such as inter-floor noise or snoring are low, and high-frequency noise can be removed if the LPF transmits only low frequencies.

However, a magnified view of the signals shows that, although the noise component of the PCB signal is partially removed, delay time (about 50ms, half cycle in the case of 10Hz signal) will occur as a result of passing through the LPF. In addition, if a response signal is supplied later, it is possible that the same will be supplied in the same direction as the original vibration signal due to the delay time. As a result, vibration magnification may occur.

Accordingly, there is the need for a scheme for overcoming the problem of high price, the problem of difficult real-time control (delay time), the problem of the bulky size (because of an actuator integrally attached to the vibrating body), and the problem of having to respond to the entire vibration signal (error occurrence, resonance and delay time).

### Detailed Description of the Invention

### Technical Problem

An aspect of the present disclosure is to provide a device and a method for controlling vibrations, wherein a circuit is fabricated such that an optimal response signal can be supplied through preceding vibration analysis of a vibrating body, and the response signal is supplied to an actuator when a signal is sensed by a sensor, thereby controlling vibrations.

### Technical Solution

A vibration control device according to the present disclosure preferably includes: a sensor configured to sense vibrations from a vibrating body and to transmit a signal; a control unit (PCB or FPCB) configured to deliver a response signal that counterbalances the vibration signal; and an actuator driven in response to the delivered signal, wherein the control unit is configured in advance so as to supply the response signal acquired through a preceding vibration analysis.

The control unit may include: an input unit configured to receive an transmitted vibration signal; a response signal activation unit configured to activate a counterbalance signal based upon preceding vibration analysis reacting to the vibration signal; and an output unit configured to deliver the response signal to the actuator. That is, the response methods to react to specific vibration with regard to each frequency component, to the magnitude of the response signal, to the cycle of the vibration signal, and thereby deciding the supply time of the response signal, the degree of amplitude attenuation. Also the information regarding whether or not filtering, is determined from the preceding vibration analysis.

The vibration control device may further include a electric current output adjusting device configured to adjust the amount of driving current of the actuator.

Meanwhile, the response signal may respond to the entire vibration signal. Preferably, the actuator is included in an integrated active damping kit, and a passive damper can be installed between a plate member included in the integrated active damping kit and the actuator.

The response signal activation unit preferably supplies the response signal only reacting to a configured number of frequency components among infinite number of frequency components. The configured number of frequency components may be configured in the range of 1 to N, wherein N is a natural number equal to or larger than 2.

The response signal activation unit may supply the response signal with regard to only a (+) direction signal or a (-) direction signal of the vibration signal to avoid attaching actuator unit to the vibrating body which may cause resonances.

In addition, the response signal activation unit may supply the response signal with regard to only a partial cycle of the vibration signal. The partial cycle is 1/N cycle, wherein N is a positive integer.

Multiple actuators may be installed to correspond to the number of vibration directions of the vibrating body. That is, in the case of a vibrating body rotating in multiple directions, such as a rotating shaft, multiple actuators may be used to control vibration. The actuator and the vibrating body are preferably installed separately. The actuator may be coupled to a fixing jig that is fixed somewhere other than the vibrating body.

Meanwhile, a vibration control method according to the present disclosure is characterized in that, while a response signal activation unit is preferably designed (programmed) in advance to supply a response signal acquired through a preceding vibration analysis, the response signal activation unit delivers the response signal to an actuator in response to an transmitted a vibration signal. The designed(programmed) element may include method of reacting to, selecting the number of response signals with regard to all frequency components, deciding the magnitude of the response signal, the cycle of the response signal, the supply time of the response signal, the degree of amplitude attenuation, and the conduction of filtering.

Meanwhile, the response signal may be responding to the entire vibration signal.

The response signal activation unit may supply the response signal only to a configured number of frequency component vibration signals in the order of the largest amplitude among an infinite number of frequency components vibration signals. The number of frequency components may be configured in the range of 1 to N, wherein N is a natural number equal to or larger than 2.

The response signal activation unit may supply the response signal with regard to only a (+) direction signal or a (-) direction signal of the vibration signal.

In addition, the response signal activation unit may supply the response signal with regard to only a partial cycle of the vibration signal. The partial cycle is 1/N cycle, wherein N is a positive integer.

The actuator preferably counterbalances vibration in multiple directions according to the vibration direction of the vibrating body.

### Advantageous Effects

As described above, according to the device and method for controlling vibration according to the present disclosure, there is no need to install a frequency analyzer (vibration analysis equipment) in the active damping kit since preceding vibration analysis is conducted. And it is possible to configure an active damping kit that is small sized and inexpensive. In addition, since no signal analysis is conducted inside the active damping kit, real-time response to vibration is possible.

Furthermore, since preceding vibration analysis is conducted, it is possible to configure the active damper's response signal, including the damper installation position, the response signal magnitude, the frequency, the supply time (1/2 or 1/4 cycle), and the number of supplies, so as to conform to the vibrating body. Accordingly, can be optimized and applied to various environments.

In addition, preceding vibration analysis is conducted so as to respond only to a finite number of frequency components having the largest vibration magnitudes. Accordingly, the circuit/actuator configuration and operation can be simplified, the control accuracy and efficiency can be improved, and the error/delay time can be suppressed. That is, the signal process is simple, and the error/delay time is reduced during the processing process, thereby enabling an accurate response in real time.

Meanwhile, by separating the actuator from the vibrating body and designing such that vibration is isolated between the actuator driving unit and the active damping kit, the possibility of resonance can be prevented, thereby enabling effective vibration control.

### Brief Description of the Drawings

FIG. 1 is an explanatory diagram illustrating a process for vibration analysis and structure/equipment stabilization.
FIG. 2 is a configuration diagram of a passive damper.
FIG. 3 is a configuration diagram of an active damper.
FIG. 4 is an explanatory diagram illustrating the operation mechanism of a conventional active damper in terms of sensing, signal processing, and supplying reaction signal.
FIG. 5 is a diagram including vibration waves provided to describe problems that may be caused by delay time in the case of an active damper in which an inverse signal is generated with regard to the entire vibration signal.
FIG. 6 is a diagram including vibration waves illustrating an original vibration signal and a signal that has passed through a PCB.
FIG. 7 is a diagram including vibration waves illustrating a PCB signal and an LPF passed signal together with a magnified diagram thereof.
FIG. 8 is a configuration diagram of an embodiment of the vibration control device of the present disclosure.
FIG. 9 is a conceptual diagram illustrating an operation steps of a vibration control device of the present disclosure.
FIG. 10 is a photograph of an embodiment of the PCB of the present disclosure.
FIG. 11 is a conceptual diagram illustrating vibrations with each frequency component and the effect of subtracting a finite number of vibrations with frequency component of large vibration magnitude.
FIG. 12 is a diagram illustrating typical impulse vibration.
FIG. 13 is a waveform diagram in case of responding to the entire vibration signal(a), or to a part thereof (b), (c), (d).
FIG. 14 is a diagram of entire vibration signal and vibration signal of individual frequency 1,2,3,4.
FIG. 15 is a diagram illustrating the result of removing the vibration signal(s) with largest amplitudes from the entire vibration signal.
FIG. 16 is a diagram of earthquake as an example of random vibration together with a magnified diagram thereof.
FIG. 17 is a waveform diagram illustrating ten cycles of an impulse vibration of 10Hz frequency.
FIG. 18 is a waveform diagram illustrating an actual inter-floor vibration signal causing noise.
FIG. 19 is a diagram illustrating vibration intensity of a ceiling causing inter-floor noise.
FIG. 20 is a conceptual diagram illustrating multi axial vibration control.
FIG. 21 is a conceptual diagram illustrating the vibration control of a wall.
FIG. 22 is a diagram illustrating the vibration control of a shaft.
FIG. 23 is a conceptual diagram illustrating control of irregular the vibration control (earthquake) of a wall with a fixing jig.

### Mode for Carrying Out the Invention

Prior to designing a vibration control device (active damper), a preceding vibration analysis is conducted to analyze the vibration of a vibration control target (vibrating body) so as to identify the vibration characteristics (frequency, vibration magnitude, cycle, vibration dissipation tendency, and the like), and the control unit is designed(programmed) in advance such that a response signal optimized for the vibration control is supplied. There is no need to install an expensive frequency analyzer in the active damping kit, since preceding vibration analysis is conducted. And it is possible to configure an active damping kit that is small sized and inexpensive.

On the other hand, it is possible to employ, as a vibration suppressing method, a scheme of using a signal sensed by a sensor and directly transmitting the same, or a method of controlling vibration in response to only one direction ((+) direction or (-) direction) or to only 1/2 cycle or 1/4 cycle of the signal, so as to conform to vibration characteristics of a structure. Both methods are preceded by vibration analysis, thereby no analyzing of vibration inside the kit, and naturally real time vibration control is thus possible.

An example of implementation of a device and a method for controlling vibration according to the present disclosure will now be described with reference to specific embodiments.

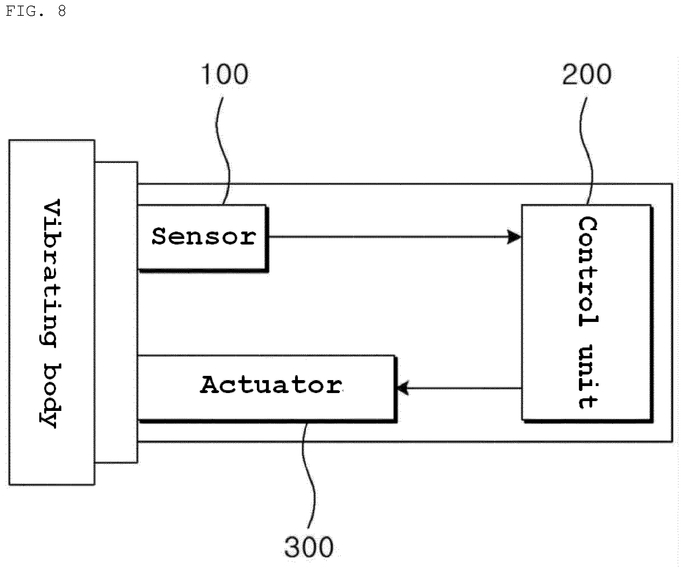

FIG. 8 is a configuration diagram of an embodiment of the vibration control device of the present disclosure.

Referring to FIG. 8, the vibration control device according to the present disclosure includes: a sensor 100 for sensing vibration of a vibrating body and transmitting the vibration signal; a control unit 200 for receiving the vibration signal from the sensor, activating and delivering a response signal that counterbalances the vibration signal; and an actuator 300 that is driven by the delivered signal from the control unit.

The control unit 200 is designed (programmed) in advance so as to deliver an effective response signal acquired through preceding vibration analysis of the vibration, and the vibration magnitude acquired by the sensor.

Meanwhile, although the actuator 300 is illustrated as being coupled to the vibrating body in the present embodiment, the actuator 300 may be installed separately from the vibrating body.

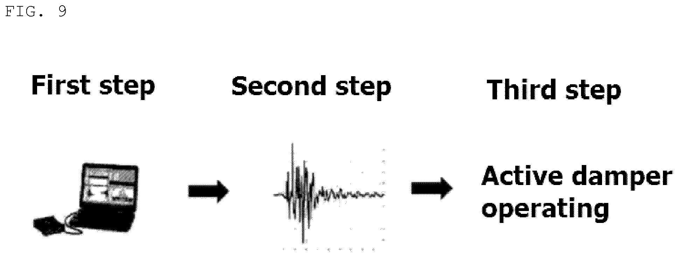

FIG. 9 is a conceptual diagram illustrating an operation steps of a vibration control device of the present disclosure.

Referring to FIG. 9, the vibration mechanism of the vibration control device according to the present disclosure may be divided into the following three steps:
- First step: preceding vibration analysis of the vibrating body is conducted. The preceding vibration analysis is conducted to identify the magnitude of the vibration, the cycle, the degree of attenuation of the amplitude, and a finite number (1-3) of frequency components having the largest amplitude among an infinite number of frequency component vibrations, or to select a finite number (1-3) of frequency components (1-3) through signal filtering (filtering low-frequency components by computer programming of a PCB circuit (control unit 200)). Although it is assumed in the description of the present embodiment that 1-3 frequency components are selected, N frequency components may be selected as desired. In this case, N is a natural number equal to or larger than 1.

As a result, the control unit does not require the frequency analysis, and thus can be fabricated at a low cost. In addition, the control unit 200 can be simplified so as to respond only to a finite number (1-3) of frequency components such that not only can the circuit be fabricated easily, but a real-time response is also possible because of no vibration analysis inside unit. Furthermore, since the time necessary for the actuator 300 to respond can be designed and limited in advance, and since it is unnecessary to supply a signal responding to the entire signal, the possibility of resonance can be excluded. Moreover, since the control unit 200 conducts simple signal processing, noise occurrence, signal processing time, actuator response time, and the like can be minimized.
- Second step: vibration occurring in the vibrating body the characteristics of which are precedently analyzed, and therefore all the informations of the vibration are already in the control unit. When the vibration is sensed by the sensor 100, the control unit can readily deliver all the necessary informations to the actuator.
- Third step: when the vibration signal is delivered to the control unit 200, an effective response signal is supplied to drive the actuator 300.

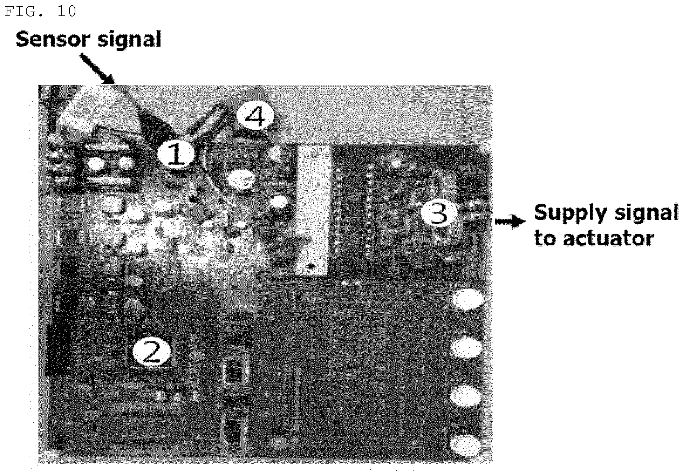

FIG. 10 is a photograph of an embodiment of the control unit(PCB) of the present disclosure.

Referring to FIG. 10, the control unit 200 according to the present disclosure includes: an input unit 1 configured to receive a sensed signal; a response signal activation unit 2 designed (programmed) in connection with the response signal method, the number of times the response signal is supplied, the magnitude of the response signal, the cycle of the response signal, response time adjustment, delay time, and the like; and an output unit 3 configured to supply the response signal to the actuator 300.

The control unit 200 may further include a electric current output adjusting device 4 for adjusting the amount of actuator driving current.

The control unit 200 according to the present disclosure, configured as above, receives/delivers signals inside the vibration control device (active damper), and plays the role of an interface between the sensor 100 and the actuator 300. That is, if the sensor 100 senses a vibration signal, the response signal activation unit 2 generates a response signal and delivers the same to the actuator 300.

Meanwhile, the vibration occurring in the second step of FIG. 9 includes an infinite number of frequency components. Among the same, about 1-3 frequencies have 80-90% of the energy of the vibration, and it is accordingly most efficient to remove 1-3 major frequency components. According to the present disclosure, vibration is divided into respective frequency components through preceding vibration analysis, and only a finite number of frequency components are removed, thereby efficiently dissipating vibration.

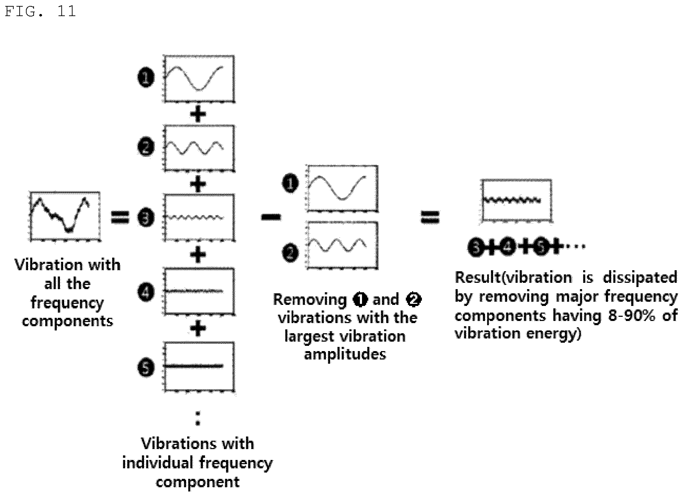

FIG. 11 is a conceptual diagram illustrating vibrations with all the frequency components, and the effect of subtracting a finite number of vibrations with frequency component(s) of large vibration magnitude.

Referring to FIG. 11, vibration components ① to ⑤ can be obtained in advance through preceding vibration analysis, and, for example, major vibration components ① and (2) may be removed to accomplish efficient vibration dissipation. Specifically, the Vibration with all the frequency components is identical to adding up five frequency components ① to ⑤, and it can be confirmed that, by removing two signals ① and ② having the largest amplitudes, 80-90% of the entire vibration is dissipated. It can be understood that, in this case, the delay time and error can be substantially reduced compared with the case of responding to the current five or more (in general, an infinite number of) signals. This can be accomplished by designing (programming) the response signal activation unit 2 of the control unit, which has been designed, so as to generate an optimal response signal for controlling major vibrations. As such, by using a response signal related to 1-3 frequency components identified in advance, the possibility that noise will occur can be reduced (because signal processing is simple), and a real-time response by the control unit 200 is more probable. In addition, since such a signal can be implemented by the actuator 300 in a simple manner, the response time is short, and mechanical erroneous operations can be minimized.

Meanwhile, the types of vibrations can be generally classified into vibration resulting from impacts (inter-floor noise, snoring, vibration resulting from an instantaneous acceleration/deceleration), harmonic vibration (vibration resulting from centrifugal force from a rotating body such as a motor, shaft), and random vibration (earthquake). A method for suppressing vibrations in response to each mode of vibration will now be described.

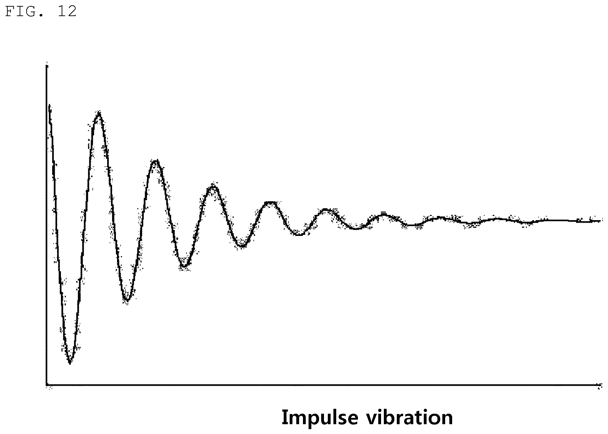

FIG. 12 is a diagram illustrating typical impulse vibration.

Referring to FIG. 12, the impulse refers to an "impact", and examples of impulse vibration include snoring, sounds of kids running around, hammering sounds, and dropping object sounds. That is, impulse vibration refers to vibration resulting from a short and strong impact. An exemplary method for suppressing impulse vibration will now be described.

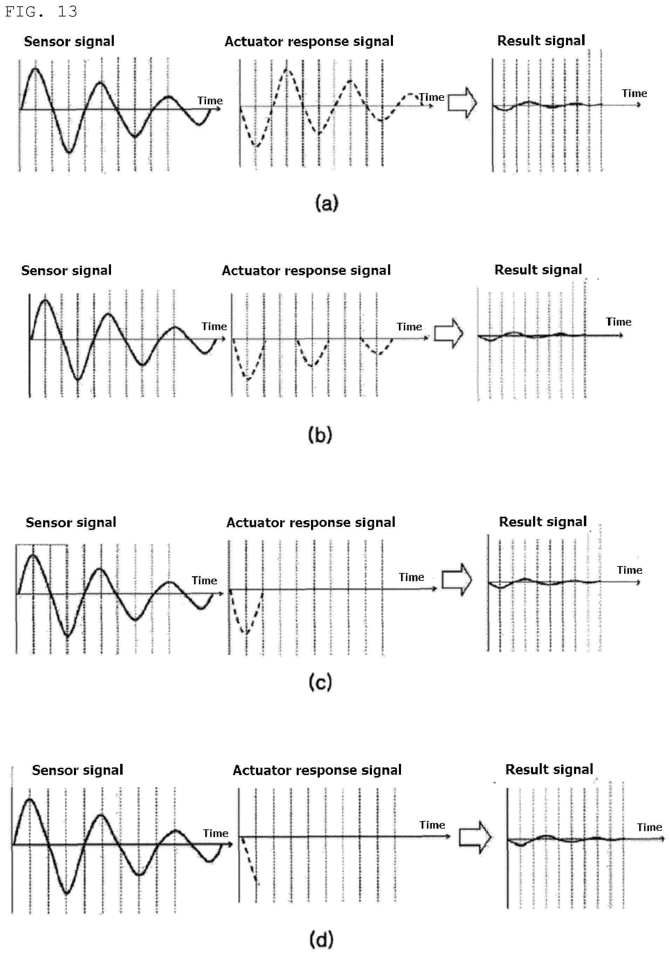

FIG. 13 is a waveform diagram in the case of responding to the entire vibration signal(a), or to a part thereof (b), (c), (d).

FIG. 13(a) corresponds to an exemplary method of responding to the entire vibration signal, and a signal sensed by the sensor 100 is used to directly transfer the opposite signal to the actuator 300. Since this method needs to supply the entire opposite signal of the vibration signal, the vibration control device (active damper) according to the present disclosure needs to be coupled to the vibrating body. The frequency of the active damper for supplying inverse vibration while the active damper and the vibrating body are coupled to each other is equal to the vibration of the vibrating body. Accordingly, this method has a very high possibility of resonance, as mentioned above in connection with the prior art. Therefore, according to the present disclosure, a passive damper is preferably installed on the actuator driving unit and the active damper coupling unit so as to isolate vibration.

Meanwhile, there may be another vibration control method wherein a response is made only to signals in one direction ((+) direction signals or (-) direction signals).

FIG. 13(b) corresponds to a waveform diagram in the case of responding only to one direction of the vibration signal.

The magnitude of vibration is sensed such that the actuator 300 operates only a predetermined number of times. This is because, in case of impulse vibration, vibration is transient after the initial vibration response, and thus there is no need to respond thereto.

In this case, the vibrating body and the actuator 300 are preferably spaced apart from each other so as to prevent any possibility of resonance that may occur in the vibration control method described above with reference to FIG. 13(a).

There may be another vibration control method wherein a response is made only at a partial cycle of a vibration cycle.

FIG. 13(c) and FIG. 13(d) correspond to waveform diagrams in the case of responding only to 1/2 cycle and in case of responding only to 1/4 cycle, respectively.

Referring to FIG. 13(c) and FIG. 13(d), a response signal is generated for 1/2 cycle, or for 1/4 cycle.

By responding only to 1/2 cycle or 1/4 cycle, and supplying signals for a predetermined period of time (or number of times) only in this manner, vibration can be controlled with no possibility of resonance. All of the four methods described above are preceded by vibration analysis such that vibration can be controlled effectively by supplying an optimal response signal in real time. As a result of fabricating an active damping kit based on preceding vibration analysis. Although it is assumed in the description of the present embodiment that a response is made to 1/2 cycle or 1/4 cycle only, it is also possible to respond to a cycle of 1/N (wherein N is a positive integer).

In FIG. 13(a) to FIG. 13(d), the actuator 300 operates according to the type of the graph presented as a vibration control method in response to impulse vibration such that the actuator 300 moves forward/backward in response to the (+) direction signal and (-) direction signal. Since the actuator 300 and the vibrating body face each other, if the vibrating body moves to (-) direction, the actuator 300 moves to (+) direction having the same magnitude. As a result, the actuator and the vibrating body collide with each other and counterbalance the magnitude, thereby dissipating the vibration. For example, as a scheme to solve the problem of inter-floor noise, the lamp on the ceiling in the living room may be removed, and an active damping kit assembled to a steel plate may be attached to the ceiling. No matter where impacts occur (kitchen, master bedroom, child room, living room), the largest amplitude occurs at a specific location (around the center of the living room) that differs in each apartment. The location of the center lamp mostly conforms to that location such that, by controlling vibration at that location, at least 80-90% of the vibration and noise of the entire apartment can be dissipated, thereby reducing noise substantially.

Meanwhile, a method for suppressing vibration in response to harmonic vibration (cyclic vibration, vibration of a rotating body, or vibration resulting from centrifugal force of a rotating body such as a motor, shaft), will be described.

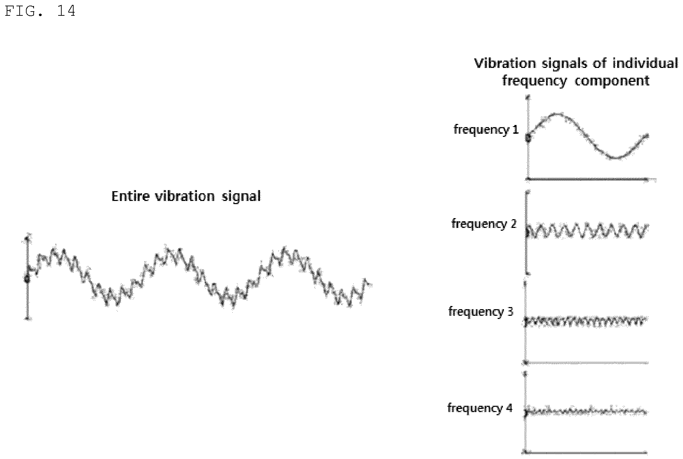

FIG. 14 is a diagram of entire vibration signal and vibration signal of individual frequency 1,2,3,4 respectively.

Referring to FIG. 14, harmonic vibration is generated by centrifugal force resulting from rotation of rotating bodies (machine tools, helicopter blades, ship propellers, screws, engines).

Harmonic vibration also has multiple frequency components and occurs repeatedly. In the present embodiment, four exemplary frequency components are illustrated in connection with harmonic vibration signal.

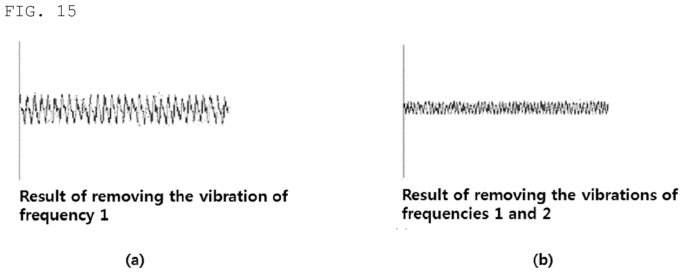

FIG. 15(a) corresponds to the result of removing the vibration of frequency 1 of Fig. 14, and FIG. 15(b) corresponds to the result of removing the vibrations of frequencies 1&2 of Fig. 14. As such, it was confirmed that more than 80% of vibration was suppressed.

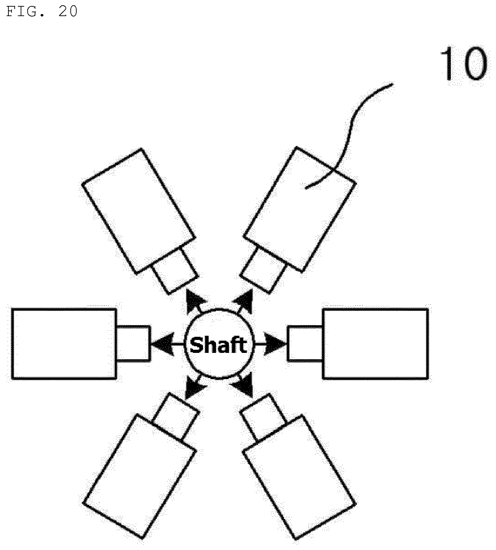

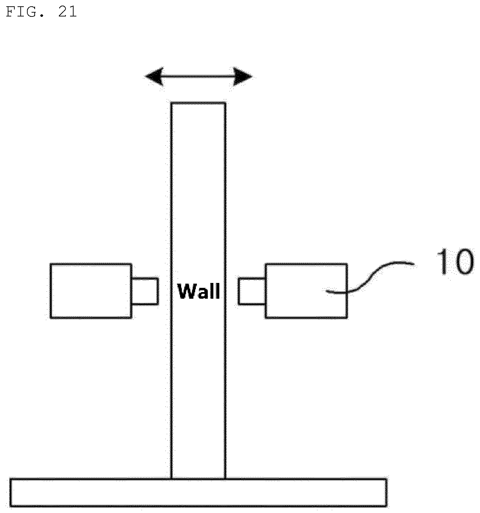

Meanwhile, in order to dissipate vibration, in the case of a rotating body such as a shaft, a response signal may be supplied at multiple locations (see FIG. 20), or a response signal may be supplied to both vibration directions of the flat type vibrating body (see FIG. 21).

Finally, a method for suppressing vibration in response to random vibration will be described.

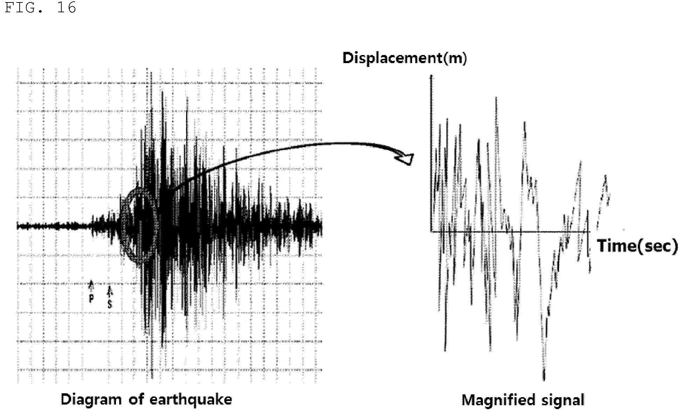

FIG. 16 is a diagram of earthquake as an example of random vibration together with a magnified diagram thereof.

Referring to FIG. 16, random vibration occurs irregularly and is caused by earthquake, as a typical example, instead of disappearing after an impact as in the case of the above-mentioned impulse vibration, or repeating at a predetermined cycle as in the case of harmonic vibration.

Since random vibration is very complicated and irregular, it is not effective to employ the method used to respond to the impulse vibration and the harmonic vibration, which have predetermined patterns. Accordingly, in such a case, a response to vibration having (+) direction signal and (-) direction signal is made in such a manner that, by installing active dampers on both vibrating-direction sides of the vibrating body, response signals are supplied from both sides. In case of earthquakes affecting buildings, for example, most buildings have at least four walls (outer walls) such that at least 70% of building earthquake can be dissipated if respective actuators 300 respond on four walls only. It is unnecessary to install actuators 300 at many locations inside buildings because buildings in general vibrate in predetermined modes depending on the characteristics of the building themselves. Therefore, at least 80% of the entire vibration can be controlled by dissipating vibration having the largest amplitude on the basis of preceding vibration analysis.

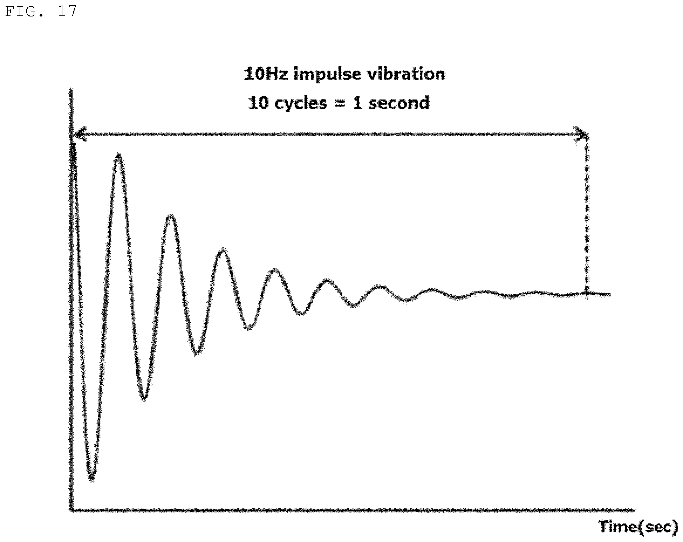

As mentioned above, in the case of a damper (see FIG. 4) having a vibration analysis process inside the active damping kit, delay time(2-4 seconds) occurs during the vibration analysis process inside the damper, making real-time control impossible. In case of vibration having 10Hz frequency as illustrated in FIG. 17, vibration with large amplitude is outstanding only for a few cycles. There is another problem in that a frequency analyzer is needed, thereby making the active damper expensive(see table 1).

On the other hand, in the case of a conventional damper (see FIG. 5) having no vibration analysis process inside the active damping kit, the response time is short because there is no vibration analysis process inside the active damping kit, but there is a delay time because it is a necessary to respond to the signal of every frequency component, and there is a high possibility of errors. There is another problem in that there is an extremely high possibility of resonance because the actuator 300 and the vibrating body need to be attached to each other so as to respond to all vibration directions (+,-).

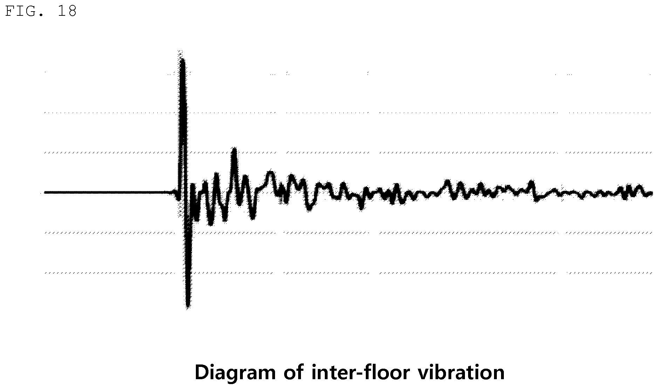

FIG. 18 illustrates an actual inter-floor vibration, which is a kind of impulse vibration, and which has various frequency components. As illustrated in FIG. 18, the inter-floor vibration is not a simple waveform, and the waveform of the building ceiling (or floor) differs depending on the size of the apartment, the builder, the design, and the materials, and the waveform measured by the sensor 100 is very complicated. Therefore, it is impossible to accurately determine the position to install the sensor and the actuator without a vibration analysis process, as in the case of the prior art (FIG. 3).

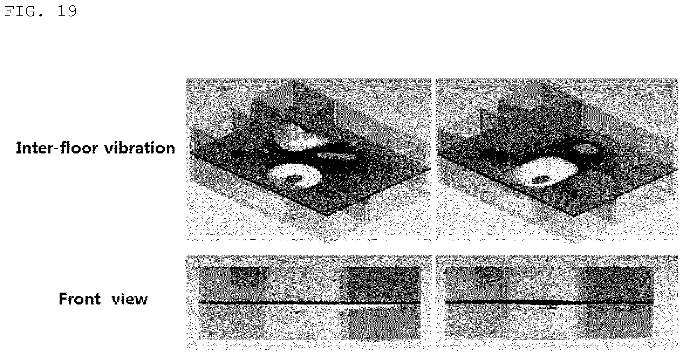

Most transient responses of mechanical structures, such as pipes, robots, or inter-floor noise result from impulses. FIG. 19 illustrates the waveform of the ceiling when impulses are applied at different locations, and it can be understood that the largest vibration occur at almost the same location regardless of the positions in which impulses are applied. Therefore, the active damper is preferably designed after identifying such a location at which large vibration occurs, the magnitude, and the mode shape through vibration analysis such that the vibration can be controlled effectively.

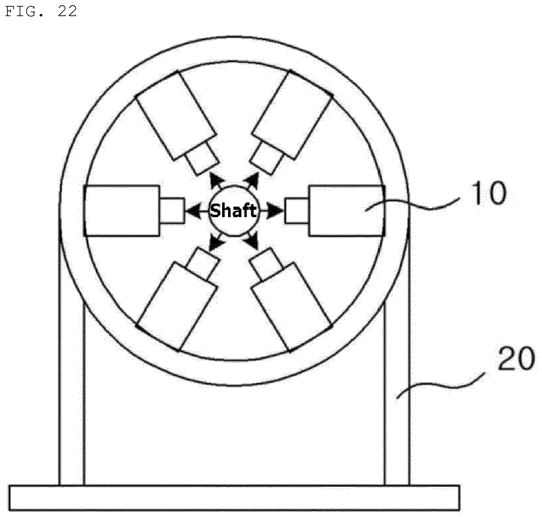

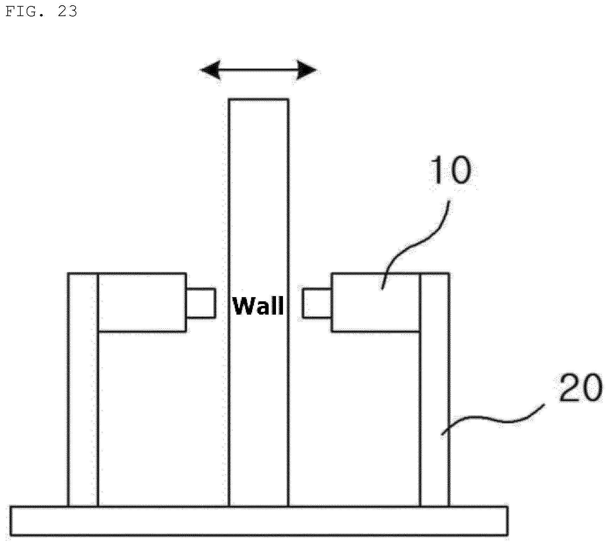

FIG. 22 and FIG. 23 are conceptual diagrams illustrating the vibration control of a shaft and wall.

Referring to FIG. 20 to FIG. 23, in connection with a vibration control device (active damper) proposed in the present disclosure, a damping unit is fabricated to include a sensor 100, a control unit (PCB or FPCB) 200, and an actuator 300, and the damping unit is assembled to a plate member (rigid body or flexible plate member), thereby completing an integrated active damping kit 10.

The completed integrated active damping kit 10 may be installed to be coupled to the vibrating body or to be separated therefrom.

When the integrated active damping kit 10 is installed to be coupled to the vibrating body, a passive damper for vibration isolation may be installed between the damping unit (actuator 300) and the plate member isolation, thereby suppressing transfer of vibration from the actuator 300 to the vibrating body, and preventing resonance.

When the integrated active damping kit 10 is installed to be separated from the vibrating body, at least one integrated active damping kit 10 is installed so as to respond to the vibration direction with fixing jig 20. The fixing jig 20 is preferably fixed in an area other than the vibrating body.

According to the present disclosure, firstly, a damper is designed to respond only to a finite number of modes having the largest vibration magnitudes based on preceding the vibration analysis. By preceding the vibration analysis, it is possible not only to fabricate the damping kit without frequency analyzer(vibration analysis equipment). But to reduce delay time, noise, and errors occurring in the process of responding to complicated signals; secondly, there is no need to install actuators 300 at multiple locations in order to respond to complicated modes; and, thirdly, the possibility of resonance can be removed by designing such that the actuator 300 is separated from the vibrating body, and vibration is isolated between the actuator driving portion and the active damping kit.

## Claims

1. A vibration control device comprising:
a sensor configured to sense vibration from a vibrating body and to transmit a vibration signal;
a control unit configured to activate and delivers a response signal that counterbalances the vibration signal; and
an actuator driven in response to the response signal, wherein
the control unit is designed in advance so as to supply the response signal acquired through a preceding vibration analysis of the vibration signal;
the response signal is acquired in advance through the vibration analysis with regard to characteristics (frequency components, periods, and the like), of vibration related to the corresponding vibrating body;
the response signal is designed to respond only to a configured number of frequency component vibration signals in the order of the largest amplitude among an infinite number of frequency component vibration signals that the corresponding vibrating body has, through the vibration analysis; and
the control unit is configured to instantly generate a pre-designed response signal without analyzing a sensed vibration signal.

2. The vibration control device as claimed in claim 1, wherein the control unit comprises:
an input unit configured to receive the sensed vibration signal;
a response signal activation unit configured to activate a response signal designed from preceding vibration analysis in response to the vibration signal; and
an output unit configured to deliver the response signal to the actuator.

3. A vibration control device comprising:
an input unit configured to receive a sensed vibration signal;
a response signal activation unit configured to activate a response signal that counterbalances the vibration signal; and
an output unit configured to deliver the response signal to the actuator, wherein
the response signal activation unit is designed in advance so as to deliver the response signal acquired through a preceding vibration analysis of the vibration signal;
the response signal is acquired in advance through the vibration analysis with regard to characteristics of vibration related to the corresponding vibrating body;
the response signal is designed to respond only to a configured number of frequency component vibration signals in the order of the largest amplitude among an infinite number of frequency component vibration signals that the corresponding vibrating body has, through the vibration analysis; and
the response signal activation unit is configured to instantly deliver a pre-designed response signal without analyzing a vibration signal transmitted from a sensor.

4. The vibration control device as claimed in claim 2 or 3, further comprising a current output adjusting device configured to adjust the amount of driving current of the actuator.

5. The vibration control device as claimed in claim 2 or 3, wherein at least one selected from vibrations of infinite frequency components, the number of generated response signals with regard to each frequency component, the magnitude of the response signal, the cycle of the response signal, the response signal supply time, the degree of amplitude attenuation, and whether or not filtering is conducted, is designed in connection with the response signal activation unit.

6. The vibration control device as claimed in claim 2 or 3, wherein the response signal is the reaction in response to the entire vibration signal or to part of the vibration signal.

7. The vibration control device as claimed in claim 6, wherein the actuator is included in an integrated active damping kit, and a passive damper is installed between a plate member included in the integrated active damping kit and the actuator.

8. The vibration control device as claimed in claim 2 or 3, wherein the response signal activation unit is configured to generate the response signal with regard to only a (+) direction signal or a (-) direction signal of the vibration signal.

9. The vibration control device as claimed in claim 8, wherein the response signal activation unit is configured to generate the response signal with regard to only a partial cycle of the vibration signal.

10. The vibration control device as claimed in claim 9, wherein the partial cycle is 1/N cycle (wherein N is a positive integer).

11. The vibration control device as claimed in claim 2 or 3, wherein the actuator is positioned in a part selected through preceding vibration analysis.

12. The vibration control device as claimed in claim 11, wherein the actuator is coupled to a fixing jig fixed in an area other than the vibrating body.

13. A vibration control method wherein, while a response signal activation unit is designed in advance to deliver a response signal acquired through a preceding vibration analysis of a vibration signal generated by a vibrating body, the response signal activation unit delivers the response signal to an actuator in response to an input of a vibration signal;
the response signal is acquired in advance through the vibration analysis with regard to characteristics of vibration related to the corresponding vibrating body;
the response signal is designed to respond only to a configured number of frequency component vibration signals in the order of the largest amplitude among an infinite number of frequency component vibration signals that the corresponding vibrating body has, through the vibration analysis; and
the response signal activation unit is configured to instantly deliver a pre-designed response signal without analyzing the sensed vibration signal.

14. The vibration control method as claimed in claim 13, wherein the designed element is at least one selected from vibrations of infinite frequency components, the number of generated response signals with regard to each frequency component, the magnitude of the response signal, the cycle of the response signal, the response signal supply time, the degree of amplitude attenuation, and whether or not filtering is determined from the preceding vibration analysis.
